# FASCICULE DE BREVET EUROPEEN

(11) **EP 3 112 130 B1**
(45) Date de publication et mention de la délivrance du brevet: **28.02.2018**
(21) Numéro de dépôt: 16176876.7
(22) Date de dépôt: 29.06.2016
(51) Int. Cl.: B29C 65/20, B29C 70/52, B29C 47/02, E06B 3/20, B29C 65/48, B29C 65/50, B29C 65/00, B29C 47/00, B29K 105/00, B29L 31/00, B29K 33/04, B29K 27/06

(54) **PROCÉDÉ DE PRODUCTION D'UNE STRUCTURE COMPOSITE RIGIDE OBTENUE PAR ASSEMBLAGE DE PROFILÉS ET CADRES RIGIDES OBTENUS A PARTIR DE CE PROCÉDÉ**
HERSTELLUNGSVERFAHREN EINER STARREN VERBUNDSTRUKTUR DURCH ZUSAMMENBAU VON PROFILEN, UND STARRE RAHMEN, DIE MIT DIESEM VERFAHREN ERZEUGT WURDEN
METHOD FOR PRODUCING A RIGID COMPOSITE STRUCTURE OBTAINED BY JOINING SECTIONS AND RIGID FRAMES OBTAINED FROM SAID METHOD

(30) Priorité: 29.06.2015 FR 1501370; 29.06.2015 FR 1501371
(43) Date de publication de la demande: 04.01.2017
(73) Titulaire: CQFD Composites, 68270 Wittenheim (FR)
(72) Inventeur: CHAUZU, Frank, 68170 RIXHEIM (FR)
(74) Mandataire: Brungard, Yves Francois

(56) Documents cités:
- WO-A1-2012/105915
- FR-A1- 3 006 233
- CHEN-CHI M ET AL: "Pultruded Fiber Reinforced Thermoplastic Poly(Methyl Methacrylate) Composites. Part II: Mechanical and Thermal Properties", POLYMER ENGINEERING AND SCIENCE, BROOKFIELD CENTER, US , vol. 31, no. 15 15 août 1991 (1991-08-15), pages 1094-1100, XP002719647, ISSN: 0032-3888 Extrait de l'Internet: URL:http://onlinelibrary.wiley.com/doi/10. 1002/pen.760311504/pdf [extrait le 2014-02-03]

## Description

La présente invention concerne un procédé de production d'une structure rigide à partir de profilés composites pultrudés, c'est-à-dire obtenu par la technologie de pultrusion. Elle concerne également les applications potentielles d'une telle structure sous la forme de cadres.

Traditionnellement, les profilés composites obtenus à partir de résines thermodurcissables sont utilisés dans de nombreuses applications à vocation structurelles, et notamment en remplacement de l'aluminium dans les situations où une isolation thermique améliorée est souhaitable.

C'est notamment le cas d'applications comme les capteurs solaires thermiques ou bien encore les cadre de fenêtres.

Pour ce dernier exemple, d'autres solutions de profilés à base de polymères extrudés (comme le PVC) existent et occupent la grande majorité du marché. Ces profilés sont généralement obtenus par la technique d'extrusion et présente des propriétés mécaniques relativement faibles notamment en flexion au regard d'autres matériaux comme l'aluminium. Dans certaines applications requérant une bonne résistance à la flexion sous charge comme dans le cas des profilés de grandes fenêtres ou véranda, il est donc connu de venir renforcer localement ces profilés plastiques par des profilés composites pultrudés communément appelés « inserts » présentant une haute résistance en traction/flexion de manière à venir rigidifier le profilé plastique et en limiter sa dilation thermique.

Néanmoins, la rigidité globale obtenue pour le profilé est nettement inférieure à celle de l'Aluminium et limite ses usages à des applications plus restreintes en termes de dimensions de cadre.

Une autre approche plus récente consiste à utiliser des profilés pultrudés traditionnels obtenus sur base de résines thermodurcissables. Compte tenu de la grande fragilité de ces résines thermodurcissables, ces matériaux composites sont généralement obtenus à partir d'un arrangement multidirectionnel de fibres ; lesdites fibres étant principalement orientées dans le sens de la grande longueur du profilé pour privilégier une bonne rigidité à la flexion longitudinale et minoritairement dans le sens transverse pour garantir un minium de tenue transverse. Dans cette configuration, les valeurs moyennes de rigidité longitudinale sont de l'ordre de 30 à 40 Gpa, parfois 45 Gpa. Ces valeurs restent malgré tout nettement inférieures à celle de l'Aluminium avec 70 Gpa.

Par ailleurs, les profilés pultrudés thermodurcissables doivent être repris en peinture pour obtenir une esthétique acceptable, une durée vie en extérieur (tenue UV, eau,..) garantie ainsi que des propriétés de retardateur de flamme exigées dans la majorité des applications bâtiment de type fenêtre ou véranda par exemple. Cette étape est coûteuse et il est compliqué d'obtenir toutes ces propriétés dans une même peinture, qui devra de surcroît présenter une excellente adhésion sur le profilé pultrudé (pour éviter le phénomène de bullage). A cet effet, il est souvent nécessaire d'appliquer un primaire pour obtenir l'adhésion requise.

Enfin, ces profilés sont très difficilement recyclables (enfouissement ou incinération sont les modes principaux de gestion de fin de vie). Ils ne sont ni déformables à chaud, ni soudables. Ils imposent donc un mode d'assemblage par vissage et/ou collage lorsqu'il s'agit de construire une structure rigide de type cadre. Ce mode de construction n'est absolument pas utilisé par les industriels de la fabrication de fenêtres en PVC ci-dessus mentionnées, qui représentent 75% du marché de la fenêtre.

Le document FR 3 006 233 A1 montre un profilé composite obtenu par pultrusion et comportant une matrice en polymère de la classe des méthacyliques ou des méthacrylates. Bien que ce profilé soit adapté à une utilisation dans des cadres de fenêtres, il ne sert que de renfort d'un profilé composé essentiellement de résine thermoplastique tel que du PVC et il ne permet pas de profiter au maximum des capacités mécaniques d'un profilé pultrudé.

La présente invention vise à résoudre l'ensemble de ces problèmes en proposant un procédé de fabrication d'une structure rigide (pouvant prendre la forme d'un cadre de fenêtre), conformément à la revendication 1 et un cadre rigide, conformément à la revendication 13. L'invention vise ainsi à produire des structures rigides avec des profilés composites présentant notamment :
- une rigidité comparable en flexion longitudinale à celle de l'aluminium,
- une conductivité thermique 500 fois plus faible que celle de l'aluminium
- une esthétique acceptée dans le secteur du bâtiment,
- une tenue au vieillissement dans le temps garantie
- un comportant au feu répondant aux exigences du bâtiment
- une production économique en une seule étape
- une capacité de recyclage accrue par rapport aux solutions thermodurcissables.

Avec ces objectifs en vue, l'invention a pour objet un procédé de production d'une structure rigide obtenue par assemblage de profilés structuraux et comportant au moins un angle de liaison entre deux profilés, dans laquelle les profilés structuraux de forme tubulaire sont obtenus par une technologie de pultrusion et dans lequel :
- la matrice utilisée pour la production par pultrusion desdits profilés est une résine thermoplastique de la famille des acryliques et/ou des acrylates et/ou des polyacryliques et/ou des polyacrylates
- ledit procédé de pultrusion est complété par au moins une étape de dépose d'un polymère thermoplastique formant une couche de recouvrement sur au moins une partie du profilé pultrudé, ladite couche de recouvrement présentant une épaisseur comprise entre 0,5 et 3 mm, préférentiellement entre 1 et 2 mm ;
- ladite couche de recouvrement est choisie dans la famille des acryliques et/ou des acrylates et/ou des PVC (Polychlorure de vinyle);
- les angles de liaison entre les profilés sont réalisés par assemblage d'au moins une extrémité des profilés avec un autre profilé de même section.

La couche de recouvrement renforce la résistance du profilé composite dans le sens transversal. La couche de recouvrement permet en outre de réaliser une protection du profilé contre la propagation du feu et contre le vieillissement dû aux rayonnements ultraviolets.

La couche de recouvrement permet d'obtenir un niveau esthétique connu et accepté dans le secteur du bâtiment ainsi qu'une tenue dans le temps éprouvée.

Dans le cas d'un profilé pultrudé uniquement composé d'un arrangement de fibres continues unidirectionnelles, la couche de recouvrement permet d'apporter une résistance transverse non négligeable dans la mesure où elle est liée chimiquement au profilé pultrudé qu'elle recouvre et où elle présente des propriétés quasi homogènes et quasi isotropes donc notamment dans le sens transverse ; direction dans laquelle le profilé composite est peu résistant. A titre d'exemple, on mesure des propriétés transverses pour le composite pultrudé selon l'invention de l'ordre de 5 à 8 Gpa et environ 3 Gpa pour une couche de recouvrement en PVC avec un comportement beaucoup plus ductile. Le PVC peut donc représenter de 40% à 60% de la résistance transversale du profilé composite, à coût très compétitif par rapport à celui du composite. Ladite couche de recouvrement pourra donc présenter une épaisseur suffisante pour apporter une résistance transverse. Selon un mode de réalisation de l'invention, le PVC pur ou le PMMA pur étant un meilleur isolant thermique que le composite, en privilégiant une épaisseur de PVC ou de PMMA plus importante que celle du composite dans les zones susceptibles d'avoir un rôle de coupure de pont thermique, on peut améliorer les performances énergétiques de la structure objet de l'invention.

On comprendra ici tout l'intérêt de l'invention qui à travers le choix d'une matrice thermoplastique pour le profilé composite, et d'une couche de recouvrement également de nature thermoplastique et compatible, permet d'obtenir des profilés de structure extrêmement rigides, ignifugés (sans que cela n'affecte la mécanique du profilé pultrudé), produits économiquement en une seule étape de transformation et en continu.

Le procédé de production objet de la présente invention est notamment remarquable en ce que l'assemblage par soudage d'au moins une extrémité d'un profilé sur l'autre pour former ladite structure est obtenue par la technique connue en soi du miroir chauffant. Cette technique, couramment utilisée chez les fabricants de fenêtres, permet de produire des cadres de façon rapide et fiable.

Selon un perfectionnement, l'assemblage des angles de liaison entre les profilés est réalisé par soudage.

Grâce à l'utilisation d'une résine thermoplastique et d'une couche de recouvrement en matière thermoplastique en épaisseur suffisante, deux profilés chauffés et mis en contact sous pression présentent d'une part une zone de contact où la matrice et les fibres des deux profilés s'interpénètrent, et d'autre part une jonction en périphérie par les couches de recouvrement, ce qui forme une zone de liaison rigide après refroidissement. De plus, grâce à l'usage d'un profilé composite dont la température de transition vitreuse est supérieure à 80° et dont la fusion complète intervient autour des 180-200°C, il est possible d'offrir une solution dont l'usage est stable en extérieur dans quasi toutes les situations d'exposition solaire (températures inférieure à 70°C généralement) et qui peut convenir au procédé actuel de soudage par miroir chauffant pratiqué à des températures généralement comprises entre 220° à 250°C.

En effet, à ces températures, sous l'action du miroir chauffant contre lequel les extrémités des profilés issus de l'invention sont plaqués sous pression, la matrice du profilé pultrudé se ramollit sur une profondeur supérieure à 3mm permettant ainsi le rapprochement et l'interpénétration des fibres des deux profilés formant un angle dudit cadre. Lors du refroidissement de l'ensemble, les deux profilés sont rigidement liés. Une couche de recouvrement complémentaire à base de PVC participera à la soudure et renforcera la liaison entre deux profilés. De plus, elle assure l'étanchéité à l'eau de la structure rigide ainsi obtenue au niveau de la jonction ainsi réalisée.

Comme indiqué ci-dessus, les profilés pultrudés composant les structures rigides objets de la présente invention sont obtenus par le procédé de pultrusion thermoplastique. Ils peuvent être obtenus par imprégnation des fibres de renforts avec un polymère fondu puis refroidi lors de la phase de calibrage ou bien être obtenus par la technique de pultrusion thermoplastique dite réactive.

Dans le cas de l'invention, la matrice du profilé pultrudé sera préférentiellement obtenue à partir d'un sirop polymérisable, constitué avant polymérisation d'une solution d'au moins un précurseur liquide sous forme de monomères et/ou d'oligomères et/ou de polymères thermoplastiques solubilisés et polymérisable sous l'action d'un catalyseur et/ou d'un amorceur et/ou d'un activateur de manière à former après polymérisation ladite résine thermoplastique de la famille des acryliques et/ou des acrylates et/ou des polyacryliques et/ou des polyacrylates.

Dans ce cas, et de manière connue en soi, les fibres de renforts sont introduites dans une première unité d'imprégnation où au moins un précurseur à très faible viscosité vient imprégner lesdites fibres.

Avant que la polymérisation ne soit (trop) avancée, les fibres imprégnées sont tirées au travers d'une unité de polymérisation grâce à un système de tirage, par exemple de type Caterpillar. Cette unité de polymérisation qui peut ou non donner sa forme définitive au profilé, a pour rôle d'activer et/ou d'accélérer la cinétique de polymérisation. Dans le cadre de l'invention, des moyens traditionnels de type outillage chauffé ou tunnel chauffant à air et/ou rayonnement peuvent être employés.

L'un des précurseurs est choisi dans la classe des méthacryliques et/ou des méthacrylates et/ou des polyméthacryliques (oligomères) et/ou des polyméthacrylates (oligomères) de manière à former après polymérisation un polymère de la classe des polyméthacryliques et/ou des polyméthacrylates. Les amorceurs peuvent être de type peroxyde.

A titre d'exemple, on pourra utiliser un sirop de précurseurs à base de copolymères acryliques et de méthacrylates de méthyle (MMA) de viscosité 150 mPa.s à 20°C amorcés avec 2,0% de peroxyde de benzoyle.

L'approche par voie réactive qui consiste à polymériser in situ au milieu des fibres le polymère final permet de travailler avec des précurseurs liquides (c'est-à-dire des monomères et/ou des oligomères et/ou des copolymères) de très faible viscosité. Ce choix permet donc d'imprégner une très grande quantité de fibres de renfort et donc d'atteindre des rigidités encore inégalées pour le profilé composite.

Sur les profilés réalisés, un module de flexion variant de 62 à 67 Gpa dans le sens des fibres a été mesuré pour un arrangement unidirectionnel de fibres de verre. Avec une telle valeur, la rigidité spécifique (rigidité/densité) du profilé pultrudé selon l'invention (65/2,1 = 31) est supérieure à celle de l'aluminium (70/2,7 =26) c'est-à-dire que l'on peut obtenir une rigidité supérieure à celle de l'aluminium à masse égale.

Pour le profilé pultrudé, le choix de précurseurs dans la classe des méthacrylates et/ou méthacryliques et notamment de précurseurs contenant du méthacrylate de méthyle (MMA) et conduisant après polymérisation à la formation d'un polyméthacrylate de méthyle (PMMA) permet en effet d'obtenir une excellente compatibilité chimique naturelle avec d'une couche de recouvrement en PVC ou bien en PMMA, c'est-à-dire dans ce dernier cas, de la même famille que la résine constituant le profilé pultrudé.

Par ailleurs, selon un mode de réalisation, on propose une étape de co-extrusion réalisée préférentiellement « en ligne » c'est-à-dire dans la continuité du procédé de pultrusion, d'un polymère de la famille des PVC (Polychlorure de Vinyle) formant la couche de recouvrement déposée autour du profilé pultrudé, ladite couche de recouvrement présentant des liaisons chimiques avec la matrice et/ou la surface des fibres du profilé pultrudé de manière à être parfaitement solidaire dudit profilé pultrudé, à la manière d'un collage.

Enfin le PMMA est un polymère amorphe dont la température de transition vitreuse peut se situer autour 80-110°C. Il commence donc à se ramollir au-delà de cette température pour devenir très mou voir fondu autour de 180 à 200°C. Cette température est bien inférieure à la température utilisée avec les machines de soudage des profilés PVC, typiquement 230-250°C. Le profilé composite peut ainsi être utilisé sur les installations de soudage sans modification.

Dans un cas particulier, ladite couche de recouvrement recouvre en totalité la section dudit profilé pultrudé. Toute la périphérie du profilé bénéficiera d'au moins l'une des propriétés de la couche de recouvrement.

De préférence, l'épaisseur de la couche de recouvrement sera préférentiellement maximum au niveau des zones externes du cadre, à l'intérieur et/ou à l'extérieur de manière à reprendre les contraintes maximum qui s'exercent dans un mouvement d'écartement ou de fermeture des angles du cadre.

En résumé, ladite couche de recouvrement, pourra selon l'invention, être avantageusement utilisée dans les zones du profilé qui:
- peuvent être exposées à un feu,
- sont visibles et exposées aux intempéries,
- doivent assurer une liaison mécanique forte par soudage des profilés entre eux,
- nécessitent une résistance transverse accrue à moindre coût,
- contribuent peu à la rigidité en flexion longitudinale,
- sont susceptibles d'avoir un rôle de pont thermique,
- sont destinées à accueillir un vissage (matière plus ductile dans le cas du PVC).

Comme indiqué ci-dessus, le profilé pultrudé pourra avantageusement être composé d'un arrangement de fibres continues unidirectionnelles uniquement.

Un autre avantage de l'invention lié à la très faible viscosité des précurseurs utilisés dans la fabrication du profilé pultrudé, réside dans l'obtention d'un taux volumique de fibres de renfort très important, supérieur à 50%, typiquement de 60% à 80%, et préférentiellement de 65% à 75%. Ainsi, de tels taux permettent d'atteindre des rigidités longitudinales extrêmement élevées mentionnées préalablement avec des fibres économiquement abordables.

Selon un mode de réalisation de l'invention, ledit profilé pultrudé présente un module de flexion longitudinal supérieur à 35 Gpa, typiquement de 50 Gpa à 68 Gpa, et préférentiellement de 55 Gpa à 65 Gpa.

Les fibres peuvent être des fibres continues ou discontinues, de type fibres de verre et/ou fibres de basalte et/ou des fibres naturelles de type fibres de lin et/ou fibres de chanvre et/ou fibres de bambou. Les fibres de carbones, bien que très onéreuses peuvent être également utilisées, au moins localement pour accentuer la rigidité.

Selon une variante, l'assemblage par soudage d'au moins une extrémité d'un profilé sur l'autre comporte une pièce rapportée insérée au niveau de l'extrémité des profilés.

L'invention a aussi pour objet un cadre rigide formée de profilés, chaque profilé comportant :
- une base de forme en profilé tubulaire obtenue par une technologie de pultrusion, la matrice dudit profilé étant une résine thermoplastique de la famille des acryliques et/ou des acrylates et/ou des polyacryliques et/ou des polyacrylates ; caractérisée en ce qu'elle comporte en outre :
- une couche de recouvrement en un polymère thermoplastique recouvrant au moins partiellement ladite base pultrudée, ladite couche de recouvrement présentant une épaisseur comprise entre 0,5 et 3 mm, préférentiellement entre 1 et 2 mm ;
- ladite couche de recouvrement est choisie dans un groupe comprenant la famille des acryliques, la famille des acrylates et la famille des PVC (Polychlorure de vinyle);
- des angles de liaison entre les profilés sont réalisés par assemblage d'au moins une extrémité des profilés avec un autre profilé de même section, la structure étant obtenue par le procédé tel que décrit précédemment.

Un tel cadre rigide est par exemple destiné à accueillir un vitrage, et est préférentiellement un ouvrant de fenêtre.

Il peut être aussi destiné à la fabrication d'une fenêtre. Ledit cadre combine alors les avantages de rigidité d'un cadre aluminium avec les performances thermiques d'un cadre 100% plastique.

De façon non limitative, l'invention pourra avantageusement offrir une solution pour les structures assemblées en extérieur de type abri de bus ou bien encore pour les vérandas, les façades vitrées de bâtiments de type « mur rideau » ou toutes autres structures, notamment celles destinées à accueillir un vitrage.

Sans être limitatif, l'invention permet aussi d'adresser avantageusement la fabrication d'un cadre destiné à accueillir des cellules photovoltaïques ou d'un cadre destiné à fabriquer l'armature d'un capteur solaire thermique. Dans le premier cas, la faible dilatation thermique du profilé pultrudé ainsi que ses propriétés d'isolation électrique sont des avantages cruciaux par rapport à l'aluminium. Dans le second cas, la capacité d'isolation thermique du cadre objet de l'invention contribuera à l'amélioration de la performance énergétique du capteur solaire thermique. Dans ce cas, la formulation des précurseurs intervenants dans la composition du profilé pultrudé est adaptée de manière à obtenir une température de transition vitreuse d'environ 110°C ; la couche de recouvrement externe pouvant être en PVC sur-chloré pour améliorer sa tenue thermique.

Avantageusement, selon un mode de réalisation de l'invention, la couche de recouvrement est formulée avec des agents permettant de ralentir la propagation de la flamme. Dans ce cas, il peut être fait usage de composés halogénés comme le brome, le chlore ou le fluor. C'est notamment le cas lorsque la couche de recouvrement est obtenue à partir de PVC ; ce polymère par nature contenant déjà du chlore en quantité suffisante pour obtenir en France des classements feu M2 ou M1 selon la norme NF P92-507, homologué pour un usage en bâtiment.

Dans le cas d'utilisation d'une couche de recouvrement sur base acrylique, comme par exemple un polymère de type PMMA qui présente d'excellentes propriétés de tenue UV et plus généralement de tenue au vieillissement atmosphérique, il sera préférentiellement fait usage de composés phosphorés et/ou azotés comme le polyphosphate d'ammonium en combinaison ou non avec des composés azotés. Selon les cas, des oxydes métalliques comme l'oxyde de titane pourront avantageusement contribuer à ralentir la propagation de la flamme.

Enfin, selon un autre mode de réalisation de l'invention, il pourra être fait usage d'une couche de recouvrement disposant d'agent intumescent qui améliore simultanément la réaction et la résistance au feu de ladite structure.

L'invention sera bien comprise, et d'autres caractéristiques et avantages de celle-ci apparaîtront, en référence aux dessins schématiques annexés, lesquels représentent, à titre d'exemple non limitatif, des formes de réalisation possible de la présente invention.
La figure 1 représente un profilé pultrudé (1) avant qu'il ne soit recouvert par la couche de recouvrement selon l'invention.
La figure 2 représente le profilé pultrudé (4) correspondant au profilé pultrudé de l'invention, c'est-à-dire recouvert d'une couche de recouvrement (2) en PVC sur la totalité de sa surface externe.
La figure 3 représente le profilé pultrudé (4) coupé à 45° en vue d'un assemblage pour former par soudage d'un angle (5) d'une structure de la présente invention.
La figure 4 représente un tel angle (5) formé par l'assemblage soudé de 2 profilés pultrudés (4) selon l'invention.
La figure 5 représente un cadre (6) objet de la présente invention,
La figure 6 représente un angle (5) en cours de réalisation par soudage au miroir chauffant (7).

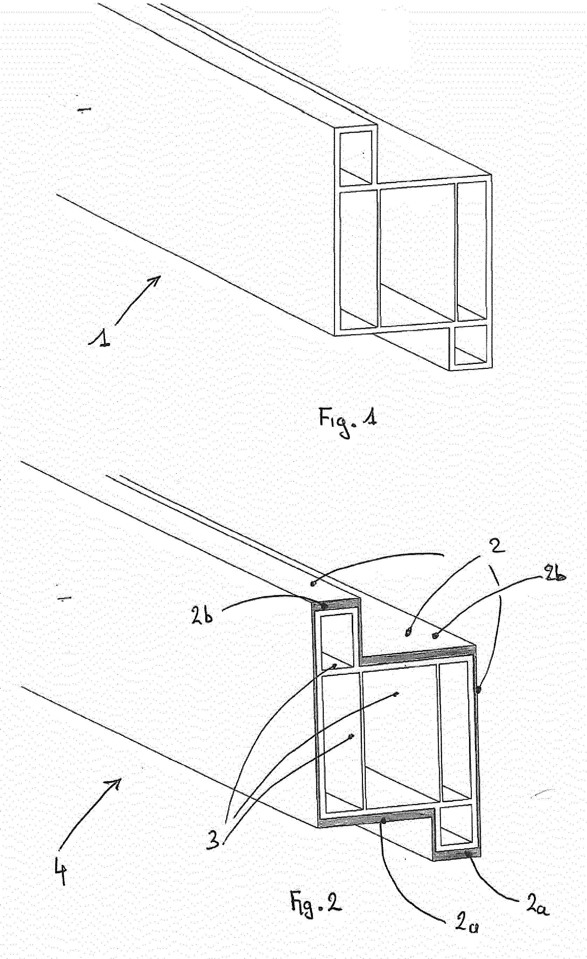

Sur la figure 1, le profilé est brut, c'est-à-dire qu'il n'est pas recouvert de la couche de recouvrement (2) visible à la figure 2. Le profilé présente un module de 65 Gpa pour un arrangement de fibres unidirectionnelles. Le profilé dispose de cloisons internes (3) qui contribuent à sa rigidité et à l'isolation thermique. Ces cloisons sont généralement d'épaisseur inférieure à celles des cloisons se situant en extérieur du profilé. Les dimensions hors tout du profilé sont de l'ordre de 60 mm.

Sur la figure 2, le profilé (4) dispose d'une couche de recouvrement (2) recouvrant l'intégralité de la surface extérieure du profilé (1).

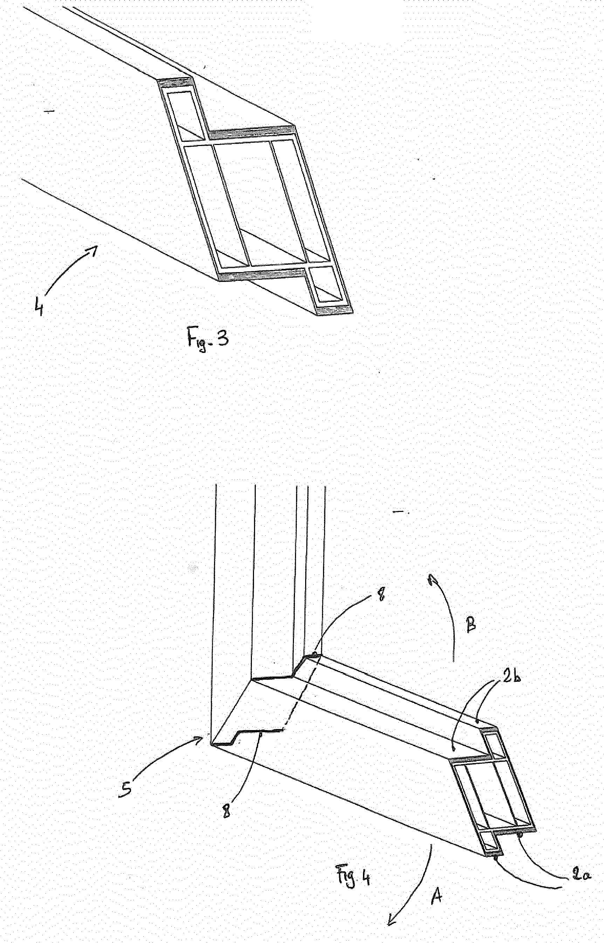

On notera que la couche de recouvrement (2) présente une épaisseur supérieure dans les zones externes (2a) et internes (2b) de l'angle (5) formé et illustré en figure 4.

La figure 4 illustre un angle (5) entre deux profilés (4) dont la zone de contrainte maximale (8), en cas d'effort ouverture (dans la direction A) ou de fermeture (dans la direction B) dudit angle, est renforcée par la présence d'une épaisseur accrue de la couche de recouvrement (2a) et (2b) destinée à participer à l'assemblage de la structure ; l'exemple présenté étant conçu pour obtenir une liaison par soudage à laquelle contribue la couche de recouvrement.

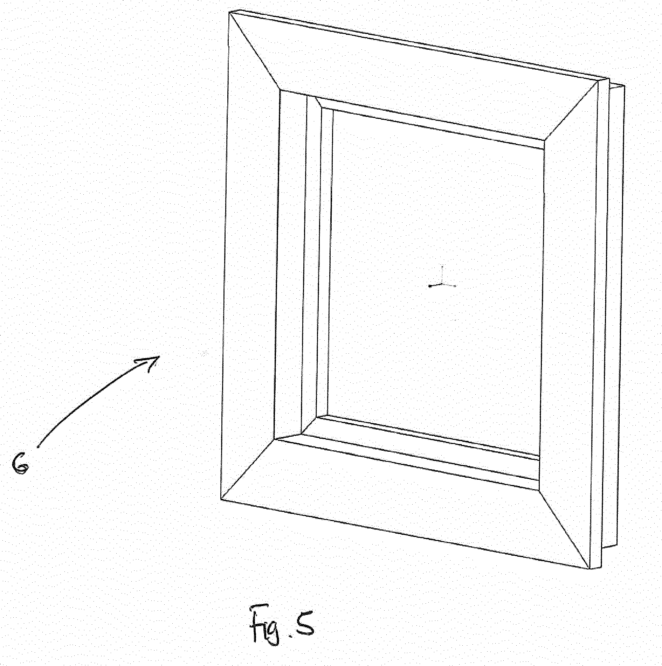

La figure 5 représente un cadre (6) objet de la présente invention de forme rectangulaire, et obtenu par l'assemblage soudé de 4 profilés pultrudés identiques selon l'invention. Il est bien compris que les cadres objets de la présente invention ne sont pas nécessairement de forme rectangulaire mais qu'ils peuvent prendre toutes formes géométriques. Un cadre ainsi réalisé, et lorsqu'il est muni d'un vitrage présente l'avantage d'avoir un coefficient de dilation extrêmement proche de celui du verre qui compose le vitrage. Contrairement aux solutions en PVC pur ou en aluminium, la structure vitrée obtenue selon l'invention se comporte comme un seul élément du point de vue de la dilation thermique et permet ainsi de conserver, quelles que soit les variations de température, une parfaite étanchéité à l'air. Il s'agit là d'un avantage précieux lorsque ladite structure est un cadre de fenêtre qui doit garantir un niveau d'isolation thermique constant dans un bâtiment. Cette dite structure présente également une rigidité élevée qui lui permet d'être utilisée dans le cas de grande baie vitrée, une bonne résistance aux UV et elle est difficilement inflammable.

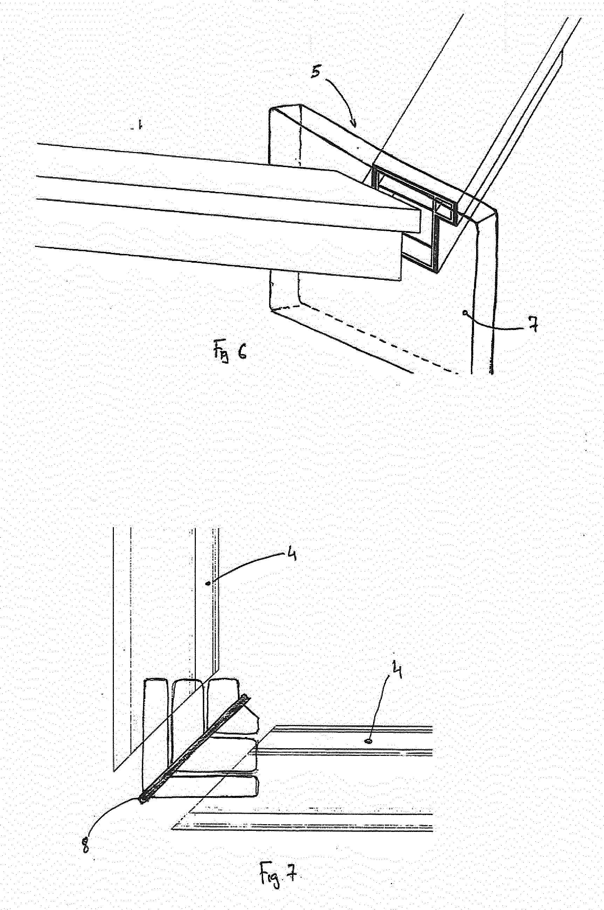

A titre d'exemple d'un mode d'assemblage possible, la figure 6 représente un angle (5) en cours de réalisation par soudage au miroir chauffant (7) qui est inséré entre les extrémités des profilés à souder de manière à ramollir et faire fondre leurs extrémités sur environ 3 à 5 mm préalablement à la mise en contact sous pression des profilés entre eux. Le temps de chauffage dans le cas de l'invention pourra durer de l'ordre de 30 à 60 secondes pour des températures de l'ordre de 240°C en fonction de l'épaisseur des diverses sections des profilés.

## Revendications

1. Procédé de production d'une structure rigide obtenue par assemblage de profilés structuraux et comportant au moins un angle de liaison entre deux profilés, dans laquelle les profilés structuraux de forme tubulaire sont obtenus par une technologie de pultrusion et dans lequel :
- la matrice utilisée pour la production par pultrusion desdits profilés (1) est une résine thermoplastique de la famille des acryliques et/ou des acrylates et/ou des polyacryliques et/ou des polyacrylates
- ledit procédé de pultrusion est complété par au moins une étape de dépose d'un polymère thermoplastique formant une couche de recouvrement (2, 2a, 2b) sur au moins une partie du profilé pultrudé (1), ladite couche de recouvrement (2, 2a, 2b) présentant une épaisseur comprise entre 0,5 et 3 mm, préférentiellement entre 1 et 2 mm ;
- ladite couche de recouvrement est choisie dans la famille des acryliques et/ou des acrylates et/ou des PVC (Polychlorure de vinyle);
- les angles (5) de liaison entre les profilés sont réalisés par assemblage d'au moins une extrémité des profilés (1, 4) avec un autre profilé (1, 4) de même section.

2. Procédé de production selon la revendication 1, dans lequel l'assemblage des angles de liaison entre les profilés est réalisé par soudage.

3. Procédé de production selon la revendication 1 ou 2, dans lequel ledit procédé de pultrusion thermoplastique est un procédé de pultrusion thermoplastique réactive obtenu à partir d'un sirop polymérisable, constitué avant polymérisation d'une solution d'au moins un précurseur liquide sous forme de monomères et/ou d'oligomères et/ou de polymères thermoplastiques solubilisés et polymérisable sous l'action d'un catalyseur et/ou d'un amorceur et/ou d'un activateur de manière à former après polymérisation ladite résine thermoplastique de la famille des acryliques et/ou des acrylates et/ou des polyacryliques et/ou des polyacrylates.

4. Procédé de production selon la revendication 3, dans lequel l'un desdits précurseurs du sirop imprégnant les fibres de renforts est choisi dans la classe des méthacryliques et/ou des méthacrylates et/ou des polyméthacryliques (oligomères) et/ou des polyméthacrylates (oligomères) de manière à former après polymérisation un polymère de la classe des polyméthacryliques et/ou des polyméthacrylates.

5. Procédé de production selon la revendication 1 ou 2, dans lequel ledit procédé de pultrusion thermoplastique est un procédé de pultrusion thermoplastique obtenu à partir d'un polymère de la classe des polyméthacryliques et/ou des polyméthacrylates.

6. Procédé de production selon l'une des revendications 1 à 5, dans lequel ladite couche de recouvrement (2, 2a, 2b) recouvre en totalité la section dudit profilé pultrudé (1).

7. Procédé de production selon l'une des revendications 1 à 6, dans lequel ledit profilé pultrudé (1) est composé d'un arrangement de fibres unidirectionnelles uniquement.

8. Procédé de production selon la revendication 7, dans lequel les dites fibres sont des fibres continues ou discontinues, de type fibres de verre et/ou fibres de basalte et/ou des fibres naturelles de type fibres de lin et/ou fibres de chanvre et/ou un mélange de ces fibres.

9. Procédé de production selon l'une des revendications 1 à 8, dans lequel ledit profilé pultrudé (1) contient un taux volumique de fibres de renfort supérieur à 50%, typiquement de 60% à 80%, et préférentiellement de 65% à 75%.

10. Procédé de production selon l'une des revendications 1 à 9, dans lequel ladite couche de recouvrement (2, 2a, 2b) présente une épaisseur maximum au niveau des zones externes (2a) et/ou interne (2b) de la liaison angulaire (5) formée par deux profilés de la structure (6) ainsi obtenue de manière à former une couche d'épaisseur maximum au niveau des zones (8) de la liaison angulaire (5) les plus sollicitées mécaniquement.

11. Procédé de production selon la revendication 2 prises en combinaison avec l'une des revendications 1 à 10, dans lequel l'assemblage par soudage d'au moins une extrémité d'un profilé sur l'autre comporte une pièce rapportée (8) insérée au niveau de l'extrémité des profilés.

12. Procédé de production selon l'une des revendications 1 à 11, dans lequel ladite couche de recouvrement (2, 2a, 2b) est obtenue par la technique de co-extrusion.

13. Cadre rigide formée de profilés, chaque profilé comportant :
- une base de forme en profilé tubulaire obtenue par une technologie de pultrusion, la matrice dudit profilé (1) étant une résine thermoplastique de la famille des acryliques et/ou des acrylates et/ou des polyacryliques et/ou des polyacrylates ; comportant en outre :
- une couche de recouvrement (2, 2a, 2b) en un polymère thermoplastique recouvrant au moins partiellement ladite base pultrudée (1), ladite couche de recouvrement (2, 2a, 2b) présentant une épaisseur comprise entre 0,5 et 3 mm, préférentiellement entre 1 et 2 mm ;
- ladite couche de recouvrement est choisie dans un groupe comprenant la famille des acryliques, la famille des acrylates et la famille des PVC (Polychlorure de vinyle);
- des angles (5) de liaison entre les profilés sont réalisés par assemblage d'au moins une extrémité des profilés (1, 4) avec un autre profilé (1, 4) de même section,
la structure étant obtenue par le procédé selon l'une des revendications 1 à 12.

14. Cadre rigide selon la revendication 13, pour lequel il s'agit d'un cadre destiné à la fabrication d'une fenêtre, ou destiné à accueillir un vitrage, et préférentiellement d'un ouvrant de fenêtre, ou destiné à accueillir des cellules photovoltaïques ou bien un capteur solaire thermique.

15. Cadre rigide selon l'une des revendications 13 ou 14, dans lequel ladite couche de recouvrement est formulée avec des agents permettant de ralentir la propagation de la flamme, préférentiellement tels que lesdits agents contiennent des composés choisis dans le groupe comprenant des composés halogénés comme le brome, le chlore ou le fluor, des composés phosphorés et/ou azotés comme le polyphosphate d'ammonium, des oxydes métalliques comme l'oxyde de titane, ou lesdits agents sont de nature intumescente.

## Patentansprüche

1. Herstellungsverfahren einer starren Struktur durch Zusammenbau von Strukturprofilen und aufweisend mindestens einen Verbindungswinkel zwischen zwei Profilen, wobei die rohrförmigen Strukturprofile mit einer Pultrusionstechnologie hergestellt sind und wobei:
- die für die Produktion durch Pultrusion der Profile (1) verwendete Matrix ein thermoplastisches Harz aus der Familie der Acryle und/oder der Acrylate und/oder der Polyacryle und/oder der Polyacrylate ist,
- das Pultrusionsverfahren von mindestens einem Schritt des Aufbringens eines thermoplastischen Polymers ergänzt wird, das eine Deckschicht (2, 2a, 2b) auf mindestens einem Teil des pultrudierten Profils (1) bildet, wobei die Deckschicht (2, 2a, 2b) eine Stärke zwischen 0,5 und 3 mm, vorzugsweise zwischen 1 und 2 mm, aufweist,
- die Deckschicht aus der Familie der Acryle und/oder der Acrylate und/oder der PVC (Polyvinylchlorid) ausgewählt ist,
- die Verbindungswinkel (5) zwischen den Profilen durch Zusammenbau von mindestens einem Ende der Profile (1, 4) mit einem anderen Profil (1, 4) desselben Querschnitts ausgeführt sind.

2. Herstellungsverfahren nach Anspruch 1, wobei der Zusammenbau der Verbindungswinkel zwischen den Profilen durch Schweißen ausgeführt ist.

3. Herstellungsverfahren nach Anspruch 1 oder 2, wobei das thermoplastische Pultrusionsverfahren ein thermoplastisches Verfahren zur reaktiven Pultrusion ist, erhalten auf der Basis eines polymerisierbaren Sirups, gebildet vor Polymerisation aus einer Lösung mindestens eines flüssigen Vorläufers in Form von Monomeren und/oder von Oligomeren und/oder von solubilisierten thermoplastischen Polymeren, und polymerisierbar unter der Wirkung eines Katalysators und/oder eines Initiators und/oder eines Aktivators, so dass nach der Polymerisierung das thermoplastische Harz aus der Familie der Acryle und/oder der Acrylate und/oder der Polyacryle und/oder der Polyacrylate gebildet wird.

4. Herstellungsverfahren nach Anspruch 3, wobei einer der Vorläufer des Sirups, der die Verstärkungsfasern imprägniert, aus der Klasse der Methacryle und/oder der Methacrylate und/oder der Polymethacryle (Oligomere) und/oder der Polymethacrylate (Oligomere) ausgewählt ist, so dass nach Polymerisation ein Polymer aus der Klasse der Polymethacryle und/oder der Polymethacrylate gebildet wird.

5. Herstellungsverfahren nach Anspruch 1 oder 2, wobei das thermoplastische Pultrusionsverfahren ein thermoplastisches Pultrusionsverfahren ist, erhalten auf der Basis eines Polymers aus der Klasse der Polymethacryle und/oder der Polymethacrylate.

6. Herstellungsverfahren nach einem der Ansprüche 1 bis 5, wobei die Deckschicht (2, 2a, 2b) den Querschnitt des pultrudierten Profils (1) vollständig bedeckt.

7. Herstellungsverfahren nach einem der Ansprüche 1 bis 6, wobei das pultrudierte Profil (1) von einer Anordnung nur eindirektionaler Fasern zusammengesetzt ist.

8. Herstellungsverfahren nach Anspruch 7, wobei die Fasern kontinuierliche oder diskontinuierliche Fasern vom Typ Glasfasern und/oder Basaltfasern und/oder natürliche Fasern vom Typ Leinenfasern und/oder Hanffasern und/oder eine Mischung dieser Fasern sind.

9. Herstellungsverfahren nach einem der Ansprüche 1 bis 8, wobei das pultrudierte Profil (1) einen Volumengehalt an Verstärkungsfasern über 50 %, in typischer Weise von 60 % bis 80 % und vorzugsweise von 65 % bis 75 % enthält.

10. Herstellungsverfahren nach einem der Ansprüche 1 bis 9, wobei die Deckschicht (2, 2a, 2b) eine maximale Stärke im Bereich der äußeren Zone (2a) und/oder inneren Zone (2b) der Winkelverbindung (5) aufweist, die von zwei Profilen der derart erhaltenen Struktur (6) gebildet wird, so dass eine Schicht maximaler Stärke im Bereich der Zonen (8) der mechanisch am stärksten beanspruchten Winkelverbindung (5) gebildet wird.

11. Herstellungsverfahren nach Anspruch 2, herangezogen in Kombination mit einem der Ansprüche 1 bis 10, wobei der Zusammenbau durch Schweißen von mindestens einem Ende eines Profils auf dem anderen ein angebrachtes Teil (8) aufweist, das im Bereich des Endes der Profile eingesetzt ist.

12. Herstellungsverfahren nach einem der Ansprüche 1 bis 11, wobei die Deckschicht (2, 2a 2b) durch die Co-Extrusionstechnik erhalten wird.

13. Starrer Rahmen, gebildet von Profilen, wobei jedes Profil aufweist:
- eine Formbasis aus rohrförmigem Profil, erhalten mittels einer Pultrusionstechnologie, wobei die Matrix des Profils (1) ein thermoplastisches Harz aus der Familie der Acryle und/oder der Acrylate und/oder der Polyacryle und/oder der Polyacrylate ist, aufweisend ferner:
- eine Deckschicht (2, 2a, 2b) aus einem thermoplastischen Polymer, die die pultrudierte Basis (1) mindestens teilweise bedeckt, wobei die Deckschicht (2, 2a, 2b) eine Stärke zwischen 0,5 und 3 mm, vorzugsweise zwischen 1 und 2 mm, aufweist,
- wobei die Deckschicht, aus einer Gruppe ausgewählt ist, die die Familie der Acryle, die Familie der Acrylate und die Familie der PVC (Polyvinylchlorid) umfasst,
- Verbindungswinkel (5) zwischen den Profilen, die durch Zusammenbau von mindestens einem Ende der Profile (1, 4) mit einem anderen Profil (1, 4) desselben Querschnitts hergestellt sind,
wobei die Struktur mittels des Verfahrens nach einem der Ansprüche 1 bis 12 hergestellt wird.

14. Starrer Rahmen nach Anspruch 13, wobei es sich um einen Rahmen handelt, der für die Herstellung eines Fensters bestimmt ist oder für die Aufnahme einer Verglasung und vorzugsweise eines Fensterflügels bestimmt ist oder bestimmt ist, Photovoltaikzellen oder auch einem thermischen Solarsensor aufzunehmen.

15. Starrer Rahmen nach einem der Ansprüche 13 oder 14, wobei die Deckschicht mit Mitteln formuliert ist, die die Ausbreitung der Flamme verlangsamen, vorzugsweise solchen Mitteln, die Verbindungen enthalten, die aus der Gruppe ausgewählt sind, die Halogenverbindungen wie Brom, Chlor oder Fluor, Phosphor- und/oder Stickstoffverbindungen wie das Ammoniumpolyphosphat, Metalloxide wie das Titanoxid enthalten, oder die Mittel sind blähbarer Art.

## Claims

1. Process for producing a rigid structure obtained by joining structural profiles and comprising at least one connecting angle between two profiles wherein the structural profiles of tubular shape are obtained by a pultrusion technology and wherein:
- the matrix used for the production by pultrusion of said profiles (1) is a thermoplastic resin of the family of acrylics and/or acrylates and/or polyacrylics and/or polyacrylates;
- said pultrusion process is completed by at least one step of depositing a thermoplastic polymer forming a covering layer (2, 2a, 2b) over at least a part of the pultruded profile (1), said covering layer (2, 2a, 2b) having a thickness comprised between 0.5 and 3 mm, preferably between 1 and 2 mm;
- said covering layer is chosen in the family of acrylics and/or acrylates and/or PVCs (polyvinyl chlorides);
- the connecting angles (5) between the profiles are made by assembling at least one end of the profiles (1, 4) with another profile (1, 4) of same section.

2. Production process according to claim 1 wherein the assembly of the connecting angles between the profiles is done by welding.

3. Production process according to claim 1 or 2 wherein said thermoplastic pultrusion process is a reactive thermoplastic pultrusion process obtained from a curable syrup consisting before curing of a solution of at least one liquid precursor in the form of monomers and/or oligomers and/or solubilised thermoplastic polymers curable under the action of a catalyser and/or an initiator and/or an activator to form after curing said thermoplastic resin of the family of acrylites and/or acrylates and/or polyacrylics and/or polyacrylates.

4. Production process according to claim 3 wherein one of said syrup precursors impregnating the reinforcing fibres is chosen from the class of methacrylics and/or methacrylates and/or polymethacrylics (oligomers) and/or polymethacrylates (oligomers) to form after curing a polymer of the class of polymethacrylics and/or polymethacrylates.

5. Production process according to claim 1 or 2 wherein said thermoplastic pultrusion process is a thermoplastic pultrusion process obtained from a polymer of the class of polymethacrylics and/or polymethacrylates.

6. Production process according to one of the claims 1 to 5 wherein said covering layer (2, 2a, 2b) fully covers the section of said pultruded profile (1).

7. Production process according to one of the claims 1 to 6 wherein said pultruded profile (1) consists of an arrangement of unidirectional fibres only.

8. Production process according to claim 7 wherein said fibres are continuous or discontinuous fibres of glass fibre and/or basalt fibre and/or natural fibre type of linen fibre and/or hemp fibre type or a mix of these fibres.

9. Production process according to one of the claims 1 to 8 wherein said pultruded profile (1) contains a reinforcement fibre content higher than 50%, typically from 60% to 80% and preferably from 65% to 75%.

10. Production process according to one of the claims 1 to 9 wherein said covering layer (2, 2a, 2b) has a maximum thickness at the outer areas (2a) and/or the inner areas (2b) of the angular junction (5) formed by two profiles of the structure (6) thus obtained so as to form a layer of maximum thickness at the areas (8) of the angular junction (5) which are the most mechanically stressed.

11. Production process according to claim 2 taken in combination with one of the claims 1 to 10 wherein the assembly by welding of at least one end of one profile to the other comprises an added part (8) inserted at the ends of the profiles.

12. Production process according to one of the claims 1 to 11 wherein said covering layer (2, 2a, 2b) is obtained by the co-extrusion technique.

13. Rigid frame formed of profiles, each profile comprising:
- a shaped base made of tubular profiles obtained by a pultrusion technology, the matrix of said profile (1) being a thermoplastic resin of the family of acrylics and/or acrylates and/or polyacrylics and/or polyacrylates, further comprising:
- a covering layer (2, 2a, 2b) made of a thermoplastic polymer covering at least partially said pultruded base (1), said covering layer (2, 2a, 2b) having a thickness comprised between 0.5 and 3 mm, preferably between 1 and 2 mm;
- said covering layer is chosen from a group comprising the family of acrylics, the family of acrylates and the family of PVCs (polyvinyl chlorides);
- connecting angles (5) between the profiles are made by assembly of at least one end of the profiles (1, 4) with another profile (1, 4) of same section,
the structure being obtained by the process according to one of the claims 1 to 12.

14. Rigid frame according to claim 13 wherein the frame is intended for the manufacture of a window or intended to accommodate glazing and preferably an opening section of a window or intended to accommodate photovoltaic cells or a solar thermal collector.

15. Rigid frame according to one of the claims 13 or 14 wherein said covering layer is formulated with agents to retard flame spread, preferably such that said agents contain compounds chosen from the group comprising halogenated compounds such as bromine, chlorine or fluorine, phosphorous and/or nitrogen compounds such as ammonium polyphosphate, metal oxides such as titanium oxide where said agents are of intumescent nature.
